# EUROPÄISCHE PATENTSCHRIFT

(11) **EP 0 933 067 B1**
(45) Veröffentlichungstag und Bekanntmachung des Hinweises auf die Patenterteilung: **12.03.2003**
(21) Anmeldenummer: 98123536.9
(22) Anmeldetag: 16.12.1998
(51) Int. Cl.: A61C 19/00

(54) **Lichthärtegerät**
Light curing apparatus
Appareil émetteur de lumière destiné à la polymérisation

(30) Priorität: 30.01.1998 DE 19803755
(43) Veröffentlichungstag der Anmeldung: 04.08.1999
(73) Patentinhaber: Ivoclar Vivadent AG, 9494 Schaan (LI)
(72) Erfinder: Senn, Bruno, 9470 Buchs (CH); Fritsche, Gregor, 9450 Altstätten (CH); Rohner, Gottfried, 9450 Altstätten (CH)
(74) Vertreter: Baronetzky, Klaus, Dipl.-Ing.

(56) Entgegenhaltungen:
- EP-A- 0 753 287
- DE-A- 2 841 112
- DE-C- 3 820 413

## Beschreibung

Die Erfindung betrifft ein Lichthärtgerät, insbesondere für die Lichthärtung von lichtpolymerisierbaren Dentalmaterialien im Mund eines Patienten, gemäß dem Oberbegriff von Anspruch 1.

Ein derartiges Lichthärtgerät ist aus der DE-OS 29 01 534 bekannt. Bei diesem bekannten Lichthärtgerät ist ein Reflektor als Dünnschichtfilter ausgebildet und soll die für die Polymerisation erforderliche Lichtstrahlung reflektieren, längerwelliges Licht jedoch durchlassen. Die durchgelassene Infrarotstrahlung soll dann von einem im Luftstrom angeordneten Wärmeleitelement aufgenommen und abgeführt werden. Zusätzlich strömt Kühlluft entlang einer Halterung für den Reflektor und trägt so zur Kühlung des Reflektors bei. Ein Absorptionsfilter ist auf einem Lichtleiter aufgebracht und soll dorthin gelangende Wärmestrahlung absorbieren.

Ferner ist es bereits bekannt worden, anstelle der Halterung einen Gegenkonus zu verwenden, der die Lichtstrahlung, die von dem Reflektor abgegeben wird, zusätzlich reflektiert und damit zur besseren Lichtausbeute beiträgt. Ein Lichthärtgerät mit einem derartigen Gegenkonus ist beispielsweise aus der DE-OS 42 11 230 bekannt.

Im Dentalbereich eingesetzte Lichthärtgeräte müssen eine hohe Lichtleistung zuverlässig über einen genau definierten Zeitraum abgeben. Der behandelnde Zahnarzt muß sich darauf verlassen, daß die abgegebene Strahlungsmenge die Polymerisation sicher durchführt, nachdem ansonsten die Füllung weich bleibt und es zur Randspaltenbildung bzw. zu Sekundärkaries kommt, und es sogar im Hinblick auf die mangelnde Härtung zu Regressansprüchen gegen den Zahnarzt kommen kann.

Daher ist es besonders wichtig, daß auch nach längerer Betriebsdauer des Lichthärtgeräts eine ausreichende Lichtleistung abgegeben wird.

Um dies sicherzustellen, ist hinsichtlich der Lichtleistung eine gewisse Reserve eingebaut, so daß die Betriebsspannung etwas erhöht werden kann, wenn der optische Wirkungsgrad der Lichtquelle abnimmt. Zwar stehen an sich Lichtquellen entsprechend hoher Leistung, insbesondere in Form von Halogenlampen, zur Verfügung. Diese setzen jedoch einen relativ grossen Teil der aufgenommenen Leistung in Wärme um, so daß ohne entsprechende Kühlung eine Überhitzung zu befürchten ist.

Ferner ist aus der DE-PS 28 41 112 ein Lichthärtgerät bekannt, das ein haubenartiges Innengehäuse aufweist, das über den Reflektor der dortigen Halogenlampe gestülpt wird. Auf diese Weise entsteht ein im wesentlichen staubdichter Innenraum, und das Innengehäuse ist auch mit Kühlrippen versehen.

Trotz großflächiger Kühlrippen gerade auch im vorderen Bereich des Innengehäuses entsteht bei dieser Lösung jedoch leicht der gefürchtete Wärmestau, der zur starken Lebensdauerreduktion oder gegebenenfalls zum Ausfall der verwendeten Bauteile führen kann, zumal der Kühlluftstrom so gewählt ist, daß zwar der Rand des Reflektors noch beaufschlagt wird, der Übergangsbereich zwischen der dortigen Halogenlampe und Reflektor jedoch recht strömungsgeschützt angeordnet ist, so daß die Kühlung durch den Kühlluftstrom nur minimal ist.

Um eine entsprechende Kühlung zu gewährleisten, ist es bekannt geworden, entsprechend starke Gebläse zu verwenden. Diese erzeugen jedoch für den Zahnarzt unerwünschte Abluft und verursachen eine entsprechend starke Geräuschkulisse. Unabhängig von der Auswurfrichtung ist die durch das Gebläse erzeugte Abluft störend, da sie zur Luftverwirbelung in der Zahnarztpraxis beiträgt und daher bereits aus hygienischen Gründen unerwünscht ist.

In diesem Zusammenhang als besonders störend wird in der Praxis ein Nachlaufen des Gebläses empfunden. Ein derartiges Nachlaufen ist andererseits bei herkömmlichen Lichthärtgeräten in vielen Fällen erforderlich gewesen, um den gefürchteten Wärmestau zu vermeiden.

Daher liegt der Erfindung die Aufgabe zugrunde, ein Lichthärtgerät gemäß dem Oberbegriff von Anspruch 1 zu schaffen, das über einen langen Zeitraum betriebssicher die erwünschte Lichtleistung abzugeben vermag, aber dennoch eine verminderte Luftströmung erzeugt und dennoch so dimensionierbar ist, daß ein Wärmestau vermieden wird.

Diese Aufgabe wird erfindungsgemäß durch Anspruch 1 gelöst. Vorteilhafte Weiterbildungen ergeben sich aus den Unteransprüchen.

Überraschend läßt sich mit der erfindungsgemäßen Lösung, eine staubdichte Kapselung des gesamten Lichtbereiches vorzunehmen und zugleich das so erzeugte, bevorzugt aus gut wärmeleitendem Metall wie Zinkdruckguß bestehende Lampengehäuse außen mit Kühlrippen auszustatten und so eine intensive Kühlung zu ermöglichen, eine verbesserte Wärmeableitung realisieren, ohne daß durch das Eindringen von Staub die Lichtleistung beeinträchtigt werden könnte.

Das erfindungsgemäße Lampengehäuse erstreckt sich längs durch das Lichthärtgerät und umgibt nicht nur eine Filterlinse, die durch die Absorption von Infrarotstrahlung an sich besonders heiß wird, sondern auch den Bereich des Befestigungssockels für die Lichtquelle, so daß aufgrund der guten Wärmeleitverbindung die Ableitung von Konvektionswärme besonders intensiv möglich ist. Nachdem ein gerader Luftstrom im wesentlichen ohne Umlenkung in dem Lichthärtgerät vorgesehen ist und die Kühlrippen in Längsrichtung von dem Luftstrom überstrichen werden, kann eine besonders intensive Kühlung mit einer geringen Gebläseleistung gepaart werden, so daß trotz der Verwendung eines leisen und eine geringe Luftströmung verursachenden Gebläses die Kühlung besonders wirksam ist.

Überraschend ist damit auch die Gefahr eines Wärmestaus gebannt, obwohl der Innenraum des Lampengehäuses nicht von der Luftströmung erreicht wird. Aufgrund der verminderten Strömungsgeschwindigkeit der Luft durch das Lichthärtgerät ist der Unterschied zwischen eingeschaltetem und ausgeschaltetem Gebläse - bei ausgeschalteter Lampe - geringer, als wenn - wie bei herkömmlichen Lichthärtgeräten - ein recht starker Luftstrom erzeugt wird, der dann schlagartig zusammenbricht, wenn das Lichthärtgerät und damit das Gebläse ausgeschaltet wird.

Erfindungsgemäß ist ein vergleichsweise großes und langsam laufenden Gebläse vorgesehen, wie es an sich bereits bekannt ist. Ein derartiges, hier neu eingesetzes Gebläse erzeugt eine geringere Luftverwirbelung und geringere Geräuschbelästigung als die bekannten bei Lichthärtgeräten eingesetzen Gebläse.

Erfindungsgemäß besonders günstig ist die intensive Verbindung des Befestigungssockels für die Lichtquelle mit der Leiterplatte. Während die Fachwelt bislang Bedenken gegen eine derartige intensive Verbindung im Hinblick auf die Notwendigkeit, empfindliche elektronische Bauteilung vor intensiver Wärmeeinwirkung schützen zu müssen, hatte, erlaubt die erfindungsgemäße Lösung in der besonders vorteilhaften Ausgestaltung, die Leiterplatte mit großen Metallflächen, also in der Regel Kupferflächen, zur Wärmeableitung heranzuziehen. Diese Metallflächen erfüllen eine Doppelfunktion, indem sie nämlich einerseits bei eingeschaltetem Gebläse im Luftstrom liegen und andererseits bei ausgeschaltetem Gebläse als Wärmestrahler dienen. Die Leiterplatte weist bevorzugt Luftdurchtrittsausnehmungen auf, um die Luftströmung um das Lampengehäuse nicht zu beeinträchtigen. Auch derartige Durchtrittsöffnungen bieten die zusätzliche Funktion, die Wärmeübertragung zu den jenseits des Befestigungssockels angeordneten empfindlichen elektronischen Bauteilen zu behindern, nachdem die Wärmeübertragung dann über entsprechend dünne Stege verläuft.

Überraschend weisen derartige Stege aufgrund ihrer seitlichen Beabstandung dennoch die erforderliche Festigkeit für die Halterung des Befestigungssockels an der entsprechenden Stelle auf, während es sich versteht, daß das Lampengehäuse selbst über entsprechende Vorsprünge an dem Gehäuse des Lichthärtgeräts innen abgestützt sein kann.

Weitere Einzelheiten, Vorteile und Merkmale ergeben sich aus der nachfolgenden Beschreibung eines Ausführungsbeispiels anhand der Zeichnung.

Es zeigen:
- Fig. 1: eine Ausführungsform eines erfindungsgemäßen Lichthärtgeräts in einer etwas vereinfachten Schnittdarstellung;
- Fig. 2: eine perspektivische Darstellung eines vorderen Teils des erfindungsgemäßen Lichthärtgeräts in der Ausführungsform gemäß Fig. 1, unter Darstellung unter anderem des Gegenkonus; und
- Fig. 3: eine perspektivische Darstellung eines hinteren Teils des erfindungsgemäßen Lichthärtgeräts in der Ausführungsform gemäß Fig. 1, unter Darstellung des Lampenkühlers, der Lichtquelle, der Leiterplatte und des Gebläses, während das Gehäuse des Lichthärtgeräts weggelassen ist.

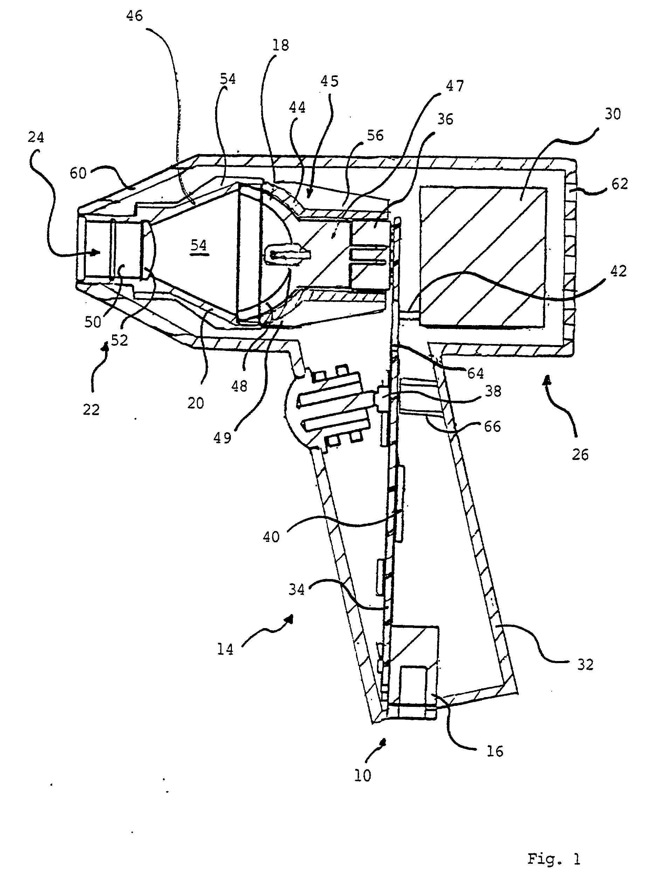

Das in Fig. 1 dargestellte Lichthärtgerät 10 weist ein Gehäuse 12 auf, das im wesentlichen pistolenförmig ausgebildet ist und ein Handstück 14 für das Lichthärtgerät bereitstellt. Das Handstück 14 ist an einer nicht dargestellten Feststation über eine Kabelverbindung angeschlossen, wobei aus Fig. 1 eine Steckbuchse 16 für den Anschluß des Kabels ersichtlich ist.

Das Handstück 14 weist eine Lichtquelle 18 auf, die bevorzugt als handelsübliche Reflektor-Halogenlampe ausgebildet ist, und in einem Lampengehäuse 20 aufgenommen ist. Das Lampengehäuse 20 weist an dem vorderen Ende 22 des Handstücks eine Aufnahme 24 für eine Lichtleitvorrichtung wie einen Lichtleitstab auf, der dazu bestimmt ist, in den Mund des Patienten eingeführt zu werden, wobei die Ausgestaltung in einer Weise vorgesehen sein kann, wie es aus der DE 42 11 235 A1 ersichtlich ist. Am hinteren Ende 26 des Handstücks 14 ist ein Gebläse 30 gelagert; und schräg durch den schräggestellten Griff 32 des Handstücks 14 erstreckt sich eine Leiterplatte 34, die einen Befestigungssockel 36 für die Lichtquelle 18, einen Schalter 38 für das Ein- und Ausschalten des Lichthärtgeräts, eine Leistungs-Erfassungselektronik 40 und die Steckbuchse 16 trägt. Zusätzlich ist das Gebläse 30 über Anschlüsse 42 an die Leiterplatte 34 angeschlossen, und im Bereich des Befestigungssockels 36 ist ein nicht dargestellter Temperatursensor angeordnet.

Erfindungsgemäß ist ein besonderes Lampengehäuse 20, das die Lichtquelle 18 umgibt, im beleuchteten Bereich staubdicht gekapselt. Das Lampengehäuse 20 ist zweiteilig ausgebildet und weist einen hinteren Bereich, der als Lampenkühler 44 bezeichnet ist, und einen vorderen Bereich, der als Gegenkonus 46 bezeichnet ist, auf. Beide Teile sind eng mechanisch miteinander gekoppelt, jedoch für das Auswechseln der Lampe lösbar verbunden. Die Position der Lichtquelle 18 wird durch den Lampenkühler 44 festgelegt. Der Lampenkühler ist so ausgebildet, daß er die Lichtquelle 18 bündig aufnimmt, so daß durch die Verschraubung mit dem Gegenkonus 46 die Position der Lichtquelle 18 in jeder Richtung festgelegt ist. Bei einer modifizierten Ausgestaltung ist ein temperaturfester Silikonring vorgesehen, der den Rand des Reflektors 48 elastisch über die Wirkung des Gegenkonus 46 elastisch gegen den Lampenkühler 44 drückt. Diese Ausgestaltung ist hinsichtlich der Fertigungstoleranzen völlig unkritisch.

Die Innenform des Lampenkühlers 44 ist möglichst gut an die Lichtquelle 18 angepaßt. Hierbei entscheidend ist ein Übergangsbereich 45 zwischen dem Reflektor 48 und einem zylindrischen Bereich 47 der Lichtquelle 18, der der Lagerung einer Glühlampe 49 dient. Die Glühlampe 49 stellt den eindeutig heißesten Teil in dem Lichthärtgerät dar, und erfindungsgemäß ist es vorgesehen, möglichst große Kühlrippen 46 des Lampenkühlers 44 so nahe wie möglich an die Glühlampe 49 heranzuführen, um die entstehende Wärme mit maximalem Wirkungsgrad abzuführen.

Auch wenn zwischen der Außenoberfläche von Reflektor 48 und zylindrischem Bereich 47 und der Innenoberfläche des Lampenkühlers 44 ein zeichnerisch bedingter Spalt dargestellt ist, versteht es sich, daß hier eine Anlage bevorzugt ist.

Um Herstellungstoleranzen zu kompensieren, kann es in einer modifizierten Ausführungsform günstig sein, den Spalt zum vorderen Ende des Reflektors 48 hin etwas zu verbreitern, um zu verhindern, daß ein Übermaß dort eine Anlage im wichtigen Übergangsbereich 45 verhindert.

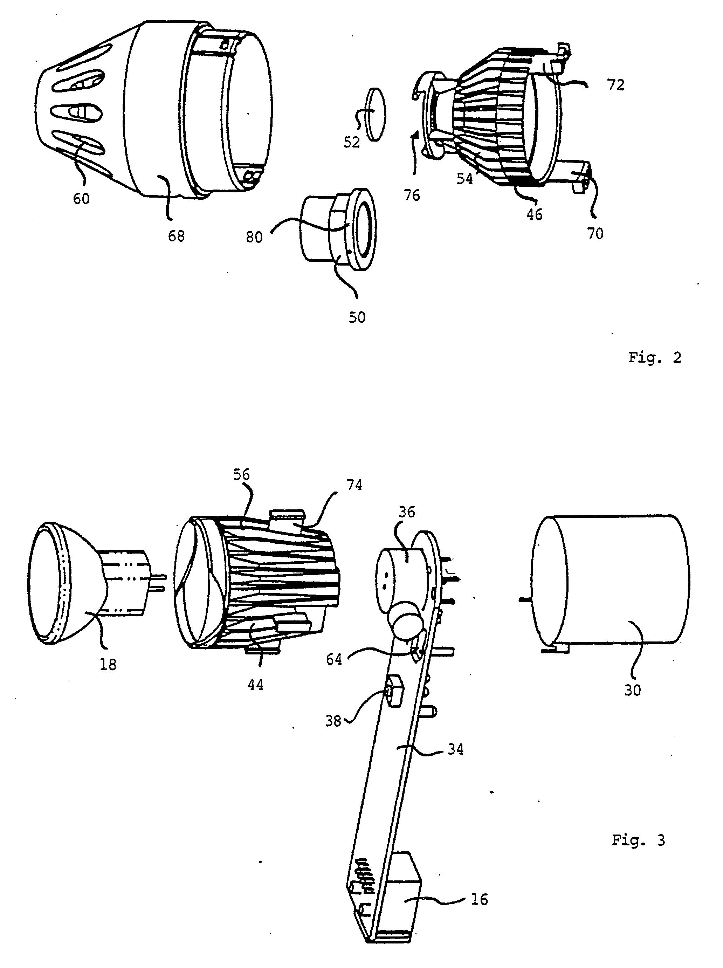

Der Gegenkonus 46 umfaßt ferner eine besser aus Fig. 2 ersichtliche Fassung 50 für den Lichtleiter, die über eine Filterlinse 52 abgedeckt ist, die gut wärmeleitend mit dem Gegenkonus 46 verbunden ist. Die Filterlinse 52 schließt den insofern hermetischen Innenraum 54 des Lampengehäuses ab, so daß der Innenraum vollständig staubdicht ist, auch wenn über Jahre hinweg eine Luftströmung außen an dem Lampengehäuse 44 entlang strömt.

Erfindungsgemäß sind ferner bevorzugt an dem Gegenkonus 46 und an dem Lampenkühler 44 Kühlrippen 54, 56 vorgesehen, die sich über im wesentlichen die gesamte Länge des Lampengehäuses 20 erstrecken, und die parallel zur optischen Achse des Lichthärtgeräts, aber auch parallel zur Luftströmung ausgerichtet sind, die durch das Gebläse 30 erzeugt wird.

Das Gehäuse 12 weist an dem vorderen, dem Gegenkonus 46 benachbarten Ende 22 Zuluftschlitze 60 und an dem hinteren Ende 26 Luftaustrittsöffnungen 62 auf. Die Luftströmung kann damit im wesentlichen gerade und ungehindert erfolgen, so daß vergleichsweise geringe Luftverwirbelungen entstehen und eine geringe Gebläseleistung erforderlich ist, um die gewünschte Kühlung zu bewirken.

Bevorzugt weist das Lampengehäuse 20 an seiner Außenseite eine vergleichsweise rauhe Oberfläche mit Mikrovertiefungen auf, die die Wärmeübertragung gegenüber der vorbeistreichenden Luft verbessern. Zusätzlich weist die Leiterplatte 34 Durchtrittsausnehmungen 64 auf, die den Luftdurchtritt auch im Bereich der Leiterplatte 34 ermöglichen und die auch aus Fig. 3 ersichtlich sind.

Die Leiterplatte 34 erstreckt sich schräg durch den Griff 32, aber senkrecht zur optischen Achse der durch den Reflektor 48 abgegebenen Lichtstrahlung. Dies ermöglicht eine preisgünstige Herstellung und gute Raumausnutzung, wobei bevorzugt der Bereich des Schalters 38 über eine Stützvorrichtung 66 zusätzlich abgestützt ist.

Bei Bedarf könnte durch eine zusätzliche kleine Luftöffnung im Bereich der Steckbuchse 16 eine Kühlung der Leiterplatte, also im wesentlichen der Leistungs-Erfassungselektronik 40, realisiert werden, wobei dies bei der bevorzugten Ausgestaltung im Hinblick auf die geringe Wärmebelastung nicht erforderlich ist, so daß der Griff 32 bei dieser Ausführungsform unten geschlossen ist.

Wie aus Fig. 2 ersichtlich ist, weist ein vorderer Teil 68 des Gehäuses 12 des Handstücks 14 die Zuluftschlitze 60 auf. Der Teil 68 ist auf dem Gegenkonus drehfest gelagert. Für den Lampenwechsel kann die komplette Einheit aus dem Teil 68 und dem Gegenkonus 46 abgeschraubt werden, so daß die Lichtquelle 18 mit ihrem Reflektor 48 und dessen äußeren Rand freiliegt und herausgezogen werden kann. An den Gegenkonus 46 sind ferner Flansche 70 und 72 angeformt, die sich seitlich um den Lampenkühler 44 erstrecken.

In einer alternativen Ausgestaltung ist es vorgesehen, anstelle der Verschraubung über Flansche den Gegenkonus insgesamt an dem Lampenkühler 44 aufzuschrauben, wobei gegebenenfalls zusätzliche Stützvorrichtungen entsprechend den Stützvorrichtungen 74 gemäß Fig. 3 vorgesehen sein können, die die Abstützung des Lampengehäuses 20 in dem Gehäuse 12 gewährleisten.

Der Gegenkonus 46 weist eine geschlitzte Aufnahme 76 für den Adapter 50 auf. Für die Montage wird zunächst die Filterlinse 52 an einer entsprechenden Vertiefung paßgenau eingelegt, und dann der Adapter 50 mit seinem vorspringenden Rand 80 von der Seite eingeschoben. Zwischen dem Adapter 50 und dem Gegenkonus 46 ist ein O-Ring vorgesehen, der die Linse sichert und schützt und zudem bereits hierdurch ein hermetischer Verschluß des vorderen Ende des Gegenkonus 46 erzeugt werden kann.

Wie aus Fig. 3 ersichtlich ist, weist nicht nur der Gegenkonus 46, sondern auch der Lampenkühler 44 zahlreiche, gleichmäßig um den Umfang verteilte Kühlrippen 56 auf. Die Kühlrippen verlaufen bis über den Bereich des Befestigungssockels 36, der auf der Leiterplatte 34 aufgenommen ist.

Aus Fig. 3 ist eine Durchtrittsausnehmung 64 für den Durchtritt von Kühlluft durch die Leiterplatte 34 ersichtlich. Eine entsprechende Durchtrittsausnehmung ist auf der anderen, durch den Befestigungssockel verdeckten Seite der Leiterplatte vorgesehen, und die Kühlluft kann damit ungehindert die Zuluftschlitze 60, die Kühlrippen 54, die Kühlrippen 56 und dann das Gebläse 30 durchstreichen.

## Patentansprüche

1. Lichthärtgerät, insbesondere für die Lichthärtung von lichtpolymerisierbaren Dentalmaterialien im Mund eines Patienten, mit einer Lichtquelle, die in einem Handstück zusammen mit einem Reflektor für die von einer Lichtquelle abgegebene Strahlung und einem Kühlgebläse aufgenommen ist, wobei die Lichtquelle (18) in einem zweiteiligen, im wesentlichen staubdichten Lampengehäuse (20) gelagert ist, das aus einem die Lichtquelle umgebenen Lampenkühler (44), der dem Reflektor benachbart und an dessen Außenform angepaßt ausgebildet ist, und einem Gegenkonus (46) besteht, wobei der Gegenkonus (46) des Lampengehäuses (20) der Lichtquelle (18) zugewandt ist und wobei das Lampengehäuse (20) an seiner Außenseite Kühlrippen aufweist, die sich parallel zur Lichtaustrittsrichtung der Lichtquelle (18) erstrecken.

2. Lichthärtgerät nach Anspruch 1, **dadurch gekennzeichnet, daß** der Lampenkühler (44) im wesentlichen konisch ausgebildet ist.

3. Lichthärtgerät nach einem der vorhergehenden Ansprüche, **dadurch gekennzeichnet, daß** sowohl der Lampenkühler (44) als auch der Gegenkonus (46) Kühlrippen (54, 56) aufweist.

4. Lichthärtgerät nach einem der vorhergehenden Ansprüche, dadurch gekenzeichnet, daß der Lampenkühler (44) sich auch über einen Befestigungssockel (36) für die Lichtquelle (18) erstreckt.

5. Lichthärtgerät nach einem der vorhergehenden Ansprüche, **dadurch gekennzeichnet, daß** die Lichtquelle (18) auf einem Befestigungssockel (36) aufsteckbar gelagert ist, der kabellos auf einer Leiterplatte (34) angebracht ist.

6. Lichthärtgerät nach Anspruch 5, **dadurch gekennzeichnet, daß** der Befestigungssockel (36) auf der Leiterplatte (34) eingelötet ist.

7. Lichthärtgerät nach einem der vorhergehenden Ansprüche, **dadurch gekennzeichnet, daß** eine Leiterplatte (34) für die Aufnahme eines Befestigungssockels (36) für die Lichtquelle (18) in dem durch ein Gebläse (30) erzeugten Luftstrom für die Kühlung der Lichtquelle (18) liegt.

8. Lichthärtgerät nach Anspruch 7, **dadurch gekennzeichnet, daß** die Leiterplatte (34) Durchbrechungen (64) aufweist, die von einem Teilluftstrom durchströmbar sind.

9. Lichthärtgerät nach einem der vorhergehenden Ansprüche, **dadurch gekennzeichnet, daß** das aus Lampenkühler (44) und Gegenkonus (46) bestehende Lampengehäuse (20) über den überwiegenden Teil seiner Außenseite mit Kühlrippen (54, 56) versehen ist, die zum vorderen und zum hinteren Ende des Lampengehäuses (20) hin eine abnehmende Höhe aufweisen.

10. Lichthärtgerät nach einem der vorhergehenden Ansprüche, **dadurch gekennzeichnet, daß** ein leistungsreduzierter und gegenüber herkömmlichen Gebläsen leiser Lüfter (30) eingesetzt ist.

11. Lichthärtgerät nach einem der vorhergehenden Ansprüche, **dadurch gekennzeichnet, daß** die Lichtquelle (18) in einen Befestigungssockel (36) einsetzbar ist, der auf einer Leiterplatte (34) mit seitlich des Befestigungssockels (36) vergrößerten Metallflächen befestigt ist, wobei für jeden Pol des Befestigungssockels (36) zwei Verbindungsstellen vorgesehen sind, und daß die Metallflächen je eine Größe von mindestens 2 cm², aufweisen.

12. Lichthärtgerät nach Anspruch 11, **dadurch gekennzeichnet, daß** für jeden Pol des Befestigungssockels (36) Lötstellen vorgesehen sind.

13. Lichthärtgerät nach einem der vorhergehenden Ansprüche, **dadurch gekennzeichnet, daß** eine Leiterplatte (34) für die Aufnahme eines Befestigungssockels (36) für die Lichtquelle einen Spannungs- und einen Stromfühler lichtquellennah aufnimmt und daß die Leistungselektronik für die Bereitstellung der Spannungs- und Stromversorgung der Lichtquelle (18) und des Gebläses (30) in der Feststation aufgenommen ist.

14. Lichthärtgerät nach einem der vorhergehenden Ansprüche, **dadurch gekennzeichnet, daß** das Handstück (14) in an sich bekannter Weise einen Griff (32) aufweist, der sich bezogen auf die optische Achse des Reflektors (48) schräg nach hinten erstreckt und daß die Leiterplatte (34) sich schräg durch.den Griff (32), im wesentlichen senkrecht zur optischen Achse des Reflektors (34), erstreckt.

15. Lichthärtgerät nach einem der vorhergehenden Ansprüche, **dadurch gekennzeichnet, daß** eine in einem Handstück (14) aufgenommene Leiterplatte (34) eine Leistungs-Erfassungsvorrichtung (40) für die Lichtquelle (18) aufweist, mit welcher die der Lichtquelle (18) zugeführte Spannung und der der Lichtquelle (18) zugeführte Strom gemessen und deren Produkt mit einer Soll-Leistung vergleichbar ist, wobei ein bekannter Anteil an der elektrischen Leistung für den Betrieb des Gebläses (30) abgezweigt und bei der Bemessung der Ist-Leistung der Lichtquelle berücksichtigbar ist.

16. Lichthärtgerät nach Anspruch 15, **dadurch gekennzeichnet, daß** die Leistungsregelung des Handstücks (14) auch unterschiedliche Kabellängen für das Verbindungskabel zwischen Handstück (14) und Feststation ausregelt.

17. Lichthärtgerät nach einem der vorhergehenden Ansprüche, **dadurch gekennzeichnet, daß** eine an die Leistungs-Erfassungsvorrichtung (40) angeschlossene Leistungs-Regelvorrichtung eine Kühlzeit-Regelvorrichtung aufweist, mit welcher die Einschaltdauer eines Gebläses (30) für die Kühlung der Lichtquelle (18) nach der aufsummierten - gegebenenfalls unterbrochenen - Einschaltdauer der Lichtquelle (18) berechenbar und festlegbar ist.

18. Lichthärtgerät nach einem der vorhergehenden Ansprüche, **dadurch gekennzeichnet, daß** eine Wärmestrahlung absorbierende Lichteinlaßvorrichtung für einen Lichtleiter in Wärmeleitverbindung mit dem Gegenkonus (46) an diesem befestigt ist.

19. Lichthärtgerät nach Anspruch 18, **dadurch gekennzeichnet, daß** die Lichteinlaßvorrichtung als Absorptionslinse ausgebildet ist.

20. Lichthärtgerät nach einem der vorhergehenden Ansprüche, **dadurch gekennzeichnet, daß** der Lampenkühler (44) und der Gegenkonus (46) miteinander verschraubt sind.

21. Lichthärtgerät nach Anspruch 20, **dadurch gekennzeichnet. daß** der Gegenkonus (46) ein Innengewinde aufweist.

22. Lichthärtgerät nach einem der vorhergehenden Ansprüche, **dadurch gekennzeichnet, daß** das Gebläse (30) einen Steckkontakt aufweist, der kabellos auf die Leiterplatte (34) aufsteckbar ist.

## Claims

1. A light curing apparatus, in particular for the light curing of photopolymerisable dental materials in a patient's mouth, having a light source which is accommodated in a hand-operated device together with a reflector for the radiation emitted by a light source and having a cooling fan, wherein the light source (18) is mounted in a two-part substantially dust-tight lamp housing (20) formed from a lamp cooler (44) which surrounds the light source, which is adjacent the reflector and which is adapted to its outer shape, and comprises a countercone (46), wherein the countercone (46) faces the lamp housing (20) of the light source (18) and wherein the lamp housing (20) has on its outside cooling fins which extend parallel to the light-outlet direction of the light source (18).

2. A light curing apparatus according to Claim 1, **characterised in that** the lamp cooler (44) is substantially conically shaped.

3. A light curing apparatus according to any one of the preceding Claims, **characterised in that** both the lamp cooler (44) and the countercone (46) have cooling fins (54,56).

4. A light curing apparatus according to any one of the preceding Claims, **characterised in that** the lamp cooler (44) also extends over a mounting socket (36) for the light source (18).

5. A light curing apparatus according to any one of the preceding Claims, **characterised in that** the light source (18) is mounted in plug-in fashion on a mounting socket (36) which is installed on a circuit board (34) without any cable.

6. A light curing apparatus according to Claim 5, **characterised in that** the mounting socket (36) is soldered on to the circuit board (34).

7. A light curing apparatus according to any one of the preceding Claims, **characterised in that** a circuit board (34) for receiving a mounting socket (36) for the light source (18) is situated in the air stream produced by a fan (30) for cooling the light source (18).

8. A light curing apparatus according to Claim 7, **characterised in that** the circuit board (34) has perforations (64) through which a partial air stream can flow.

9. A light curing apparatus according to any one of the preceding Claims, **characterised in that** the lamp housing (20) comprising the lamp cooler (44) and the countercone (46) is provided over the majority of its outside with cooling fins (54,56) which are of decreasing height towards the front end and towards the rear end of the lamp housing (20).

10. A light curing apparatus according to any one of the preceding Claims, **characterised in that** a fan (30) is used which is of reduced power and is gentler than conventional ventilators.

11. A light curing apparatus according to any one of the preceding Claims, **characterised in that** the light source (18) can be inserted into a mounting socket (36) which is mounted on a circuit board (34) with metal surfaces enlarged laterally of the mounting socket (36), wherein for each terminal of the mounting socket (36) two connection points are provided, and **in that** the metal surfaces each have a size of at least 2 cm².

12. A light curing apparatus according to Claim 11, **characterised in that** soldering points are provided for each terminal of the mounting socket (36).

13. A light curing apparatus according to any one of the preceding Claims, **characterised in that** a circuit board (34) for receiving a mounting socket (36) for the light source accommodates a voltage sensor and a current sensor near the light source, and **in that** the power electronics for providing the voltage and current supply to the light source (18) and the fan (30) is accommodated in the base station.

14. A light curing apparatus according to any one of the preceding Claims, **characterised in that** in per se known manner the hand-operated device (14) has a handle (32) which extends obliquely rearwards in relation to the optical axis of the reflector (48), and **in that** the circuit board (34) extends obliquely through the handle (32) substantially perpendicularly to the optical axis of the reflector (34) [sic].

15. A light curing apparatus according to any one of the preceding Claims, **characterised in that** a circuit board (34) accommodated in a hand-operated device (14) has a power-detecting means (40) for the light source (18), with which the voltage fed to the light source (18) and the current fed to the light source (18) are measured, and the product of which can be compared to a desired power, wherein a known portion of the electric power for the operation of the fan (30) is branched off and can be taken into account in rating the actual power of the light source.

16. A light curing apparatus according to Claim 15, **characterised in that** the power control of the hand-operated device (14) also corrects different cable lengths for the connecting cable (16) between the hand-operated device (14) and the base station (12).

17. A light curing apparatus according to any one of the preceding Claims, **characterised in that** a power control device connected to the power-detecting means (40) has cooling-time control device with which the on-time of a fan (30) for cooling the light source (18) can be calculated and determined according to the totalised (optionally interrupted) on-time of the light source (18).

18. A light curing apparatus according to any one of the preceding Claims, **characterised in that** a light-inlet device for a light guide, which absorbs thermal radiation, is mounted on the countercone (46) in heat-conducting connection therewith.

19. A light curing apparatus according to Claim 18, **characterised in that** the light-inlet device is in the form of an absorption lens.

20. A light curing apparatus according to any one of the preceding Claims, **characterised in that** the lamp cooler (44) and the countercone (46) are screwed together.

21. A light curing apparatus according to Claim 20, **characterised in that** the countercone (46) has an internal thread.

22. A light curing apparatus according to any one of the preceding Claims, **characterised in that** the fan (30) has a plug-in contact which can be plugged into the circuit board (34) without any cable.

## Revendications

1. Appareil émetteur de lumière destiné à la polymérisation, en particulier pour la polymérisation à la lumière de matériaux dentaires polymérisables à la lumière dans la bouche d'un patient, avec une source de lumière, qui est disposée dans une poignée en même temps qu'un réflecteur pour le rayonnement émis par une source de lumière et en même temps qu'une soufflerie de refroidissement, la source de lumière (18) étant placée dans un boîtier de lampe (20) en deux parties et sensiblement étanche à la poussière, qui se compose d'un refroidisseur de lampe (44) entourant la source de lumière et qui est formé au voisinage du réflecteur et en étant adapté à la forme extérieure de celui-ci ainsi que d'un cône disposé en sens contraire (46), le cône disposé en sens contraire (46) du boîtier de lampe (20) étant dirigé vers la source de lumière (18) et le boîtier de lampe (20) comprenant sur son côté extérieur des nervures de refroidissement, qui s'étendent parallèlement à la direction de sortie de la lumière hors de la source de lumière (18).

2. Appareil émetteur de lumière destiné à la polymérisation selon la revendication 1, **caractérisé en ce que** le refroidisseur de lampe (44) est réalisé sensiblement en forme de cône.

3. Appareil émetteur de lumière destiné à la polymérisation selon l'une des revendications précédentes, **caractérisé en ce qu'**aussi bien le refroidisseur de lampe (44) que le cône disposé en sens contraire (46) comportent des nervures de refroidissement (54, 56).

4. Appareil émetteur de lumière destiné à la polymérisation selon l'une des revendications précédentes, **caractérisé en ce que** le refroidisseur de lampe (44) s'étend aussi sur un socle de fixation (36) pour la source de lumière (18).

5. Appareil émetteur de lumière destiné à la polymérisation selon l'une des revendications précédentes, **caractérisé en ce que** la source de lumière (18) est placée par enfichage sur un socle de fixation (36), qui est disposé sans fil de liaison sur une carte imprimée (34).

6. Appareil émetteur de lumière destiné à la polymérisation selon la revendication 5, **caractérisé en ce que** le socle de fixation (36) est fixé par soudure sur la carte imprimée (34).

7. Appareil émetteur de lumière destiné à la polymérisation selon l'une des revendications précédentes, **caractérisé en ce qu'**une plaque de conducteurs (34) servant à recevoir un socle de fixation (36) pour la source de lumière (18) se trouve dans le flux d'air produit par une soufflerie (30) et destiné au refroidissement de la source de lumière (18).

8. Appareil émetteur de lumière destiné à la polymérisation selon la revendication 7, **caractérisé en ce que** la carte imprimée (34) comprend des ouvertures (64) qui peuvent être traversées par un flux d'air partiel.

9. Appareil émetteur de lumière destiné à la polymérisation selon l'une des revendications précédentes, **caractérisé en ce que** le boîtier de lampe (20) se composant du refroidisseur de lampe (44) et du cône disposé en sens contraire (46) est muni sur la partie prépondérante de son côté extérieur de nervures de refroidissement (54, 56), qui ont une hauteur décroissante vers l'extrémité avant et vers l'extrémité arrière du boîtier de lampe (20).

10. Appareil émetteur de lumière destiné à la polymérisation selon l'une des revendications précédentes, **caractérisé en ce qu'**une soufflerie (30) de puissance réduite et silencieuse par rapport aux ventilateurs usuels est utilisée.

11. Appareil émetteur de lumière destiné à la polymérisation selon l'une des revendications précédentes, **caractérisé en ce que** la source de lumière (18) peut être placée sur un socle de fixation (36), qui est fixé sur une plaque de conducteurs (34) avec des surfaces métalliques agrandies sur le côté du socle de fixation (36), deux points de liaison étant prévus pour chaque pôle du socle de fixation (36), et **en ce que** les surfaces métalliques ont respectivement une dimension d'au moins 2 cm².

12. Appareil émetteur de lumière destiné à la polymérisation selon la revendication 11, **caractérisé en ce que** des points de soudure sont prévus pour chaque pôle du socle de fixation (36).

13. Appareil émetteur de lumière destiné à la polymérisation selon l'une des revendications précédentes, **caractérisé en ce qu'**une carte imprimée (34) servant à recevoir un socle de fixation (36) pour la source de lumière est munie à proximité de la source de lumière d'un capteur de tension et d'un capteur de courant et **en ce que** l'électronique de puissance pour la mise à disposition de l'alimentation en tension et de l'alimentation en courant pour la source de lumière (18) et pour la soufflerie (30) est disposée dans la station fixe.

14. Appareil émetteur de lumière destiné à la polymérisation selon l'une des revendications précédentes, **caractérisé en ce que** la poignée (14) comprend d'une manière connue en soi une crosse (32), qui s'étend en biais vers l'arrière par rapport à l'axe optique du réflecteur (48) et **en ce que** la plaque de conducteurs (34) s'étend en biais à travers la crosse (32), c'est-à-dire sensiblement dans le sens perpendiculaire par rapport à l'axe optique du réflecteur (48).

15. Appareil émetteur de lumière destiné à la polymérisation selon l'une des revendications précédentes, **caractérisé en ce qu'**une plaque de conducteurs (34) placée dans une poignée (14) comprend un dispositif de saisie de puissance (40) pour la source de lumière (18), à l'aide duquel la tension fournie à la source de lumière (18) et le courant fourni à la source de lumière (18) sont mesurés et à l'aide duquel le produit de la mesure peut être comparé avec une puissance de consigne, une quote-part connue de la puissance électrique étant déviée pour le fonctionnement de la soufflerie (30) et pouvant être prise en compte pour le dimensionnement de la puissance réelle de la source de lumière.

16. Appareil émetteur de lumière destiné à la polymérisation selon la revendication 15, **caractérisé en ce que** la régulation de puissance de la poignée (14) assure aussi l'ajustement nécessaire pour différentes longueurs du câble de liaison entre la poignée (14) et la station fixe.

17. Appareil émetteur de lumière destiné à la polymérisation selon l'une des revendications précédentes, **caractérisé en ce qu'**un dispositif de régulation de la puissance raccordé au dispositif de saisie de la puissance (40) comprend un dispositif de régulation du temps de refroidissement, avec lequel peut être calculée et déterminée la durée de mise en route d'une soufflerie (30) pour le refroidissement de la source de lumière (18), et ceci en fonction de la durée de mise en route de la source de lumière (18) totalisée et éventuellement interrompue.

18. Appareil émetteur de lumière destiné à la polymérisation selon l'une des revendications précédentes, **caractérisé en ce qu'**un dispositif d'introduction de lumière pour un guide de lumière absorbant le rayonnement thermique est fixé sur le cône disposé en sens contraire (46) en étant en liaison de conduction thermique avec celui-ci.

19. Appareil émetteur de lumière destiné à la polymérisation selon la revendication 18, **caractérisé en ce que** le dispositif d'introduction de lumière est réalisé comme lentille d'absorption.

20. Appareil émetteur de lumière destiné à la polymérisation selon l'une des revendications précédentes, **caractérisé en ce que** le refroidisseur de lampe (44) et le cône disposé en sens contraire (46) sont vissés ensemble.

21. Appareil émetteur de lumière destiné à la polymérisation selon la revendication 20, **caractérisé en ce que** le cône disposé en sens contraire (46) comprend un taraudage.

22. Appareil émetteur de lumière destiné à la polymérisation selon l'une des revendications précédentes, **caractérisé en ce que** la soufflerie (30) comprend un contact enfichable, qui peut être enfiché sans fil de liaison sur la plaque de conducteurs (34).
